# EUROPEAN PATENT APPLICATION

(11) **EP 2 485 001 A1**
(43) Date of publication of application: **08.08.2012**
(21) Application number: 10820232.6
(22) Date of filing: 26.07.2010
(51) Int. Cl.: F27D 15/02, C04B 5/00

(54) **SLAG DISCHARGE SYSTEM**

(30) Priority: 30.09.2009 JP 2009228592
(71) Applicant: Mitsubishi Heavy Industries, Ltd., Tokyo 108-8215 (JP)
(72) Inventor: KOYAMA, Yoshinori, Tokyo 108-8215 (JP); YOSHIDA, Naoshige, Tokyo 108-8215 (JP); SHINADA, Osamu, Tokyo 108-8215 (JP); SODA, Yasuo, Tokyo 108-8215 (JP)
(74) Representative: HOFFMANN EITLE
(86) International application number: PCT/JP2010/062531
(87) International publication number: WO 2011/040112

(57) **Abstract**

There is provided a slag discharging system having high flexibility in layout and capable of stable slag discharge in low cost with high reliability. The slag discharging system is configured to rapidly cool slag (S), discharged by producing combustible gas in a gasification furnace (1), within cooling water into glassy slag (S), collect the slag (S) along with the cooling water discharged out of a system of the gasification furnace (1) into a slag reservoir (21), and thereafter convey the slag (S) from the slag reservoir (21) to a slag storage tank (13); and this slag discharging system includes a slag slurry tank (23) for collecting the slag (S) from the slag reservoir (21) into water so as to make the slag into slurry therein, slag slurry piping (25) for making a connection between the slag slurry tank (23) and the slag storage tank (13), and a pump (27) so disposed in the slag slurry piping (25) as to suck the slag slurry within the slag slurry tank (23) and feed the slag slurry to the slag storage tank (13).

## Description

### (Technical Field)

The present invention relates to a slag discharging system applied to a coal gasification furnace, an integrated coal gasification combined cycle power generation plant and a melting plant for waste or the like.

### {Background Art}

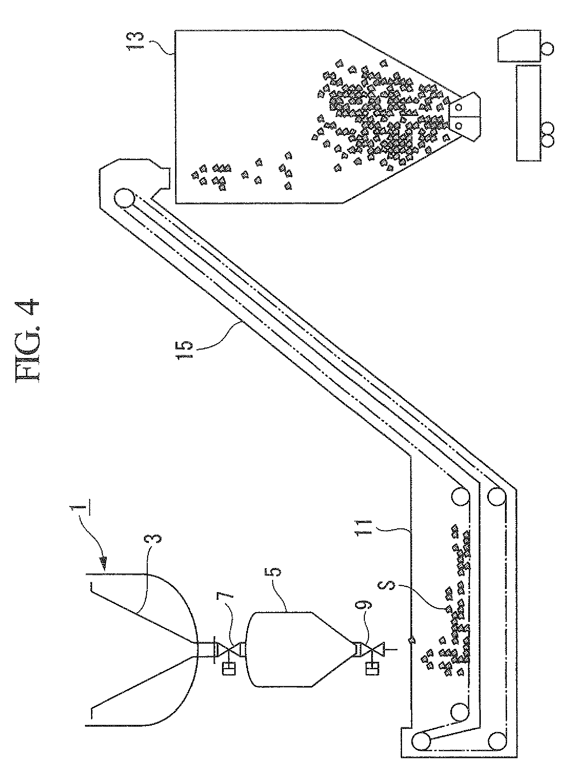

Conventionally, in a coal gasification furnace that is one kind of a melting plant, ash content (slag) discharged when producing combustible gas is melted in a furnace, and thereafter is dropped into slag cooling water and is rapidly cooled into glassy water granulated slag. This water granulated slag comes into particles of several millimeters to several tens of millimeters, and thus there is provided a slag discharging system as illustrated in Figure 4, for example.
In this slag discharging system, the slag is stored in a slag hopper 3 at a lower part of the gasification furnace 1 and then in a slag lock hopper 5.
The slag lock hopper 5 periodically discharges the slag within its hopper, thus a valve 7 of a lock hopper inlet (upper position) is closed to close up internal pressure of the gasification furnace , and thereafter a valve 9 of a lock hopper outlet (lower position) is opened to discharge the slag along with slag cooling water out of the system.

The slag S discharged from the slag lock hopper 5 is settled down at a lower position in a slag reservoir 11. In this slag reservoir 11, a slag conveyor 15 is installed for conveying the slag S thereinside to a slag storage tank 13. As this slag conveyor 15, a scraper conveyor (see Patent Literature 1) or a screw conveyor (see Patent Literature 2) or the like has been utilized conventionally, thus the slag settled down at the lower position in the slag reservoir 11 is conveyed out by the slag conveyor 15.

### {Citation List}

### {Patent Literature}

{PTL 1} Japanese Unexamined Patent Application, Publication No.2003-88832
{PTL 2} Japanese Translation of PCT International Application, Publication No.2003-518157

### {Summary of Invention}

### {Technical Problem}

By the way, according to the prior art of the above described slag discharging system, the slag conveyor 15 such as a scraper conveyor and a screw conveyor is used as conveyance means for conveying the slag S from the slag reservoir 11 to the slag storage tank 13. Since such mechanical conveyance means cannot secure a large conveyance angle, if the slag storage tank 13 becomes larger along with increase in size of the facility, limitation of the conveyance angle hinders increase in height of the tank. Specifically, in order to convey the slag S to the upper position of the slag storage tank 13 within the limitation regarding the conveyance angle of the mechanical conveyance means such as a conveyor, it is necessary to secure a sufficient conveyance distance.

In addition, the mechanical conveyance means such as the slag conveyor 15 conveys the slag S in a linear movement, thus a conveyance path from the slag reservoir 11 to the slag storage tank 13 is also limited. Specifically, because an arrangement of the slag reservoir 11 and the slag storage tank 13 is limited, a plant provided with a slag discharging system has a problem that flexibility in layout becomes lower.

If conveyance amount of the slag S increases along with increase in size of the plant, it is necessary to install plural slag conveyors 15 because of limitation of increase in size of the slag conveyor 15 (chain strength, motive power such as a motor and reduction gears, etc.). In this case, in the light of the positional relation between the slag conveyor 15 and the slag storage tank 13, or the like, larger space is required for installing the plant and it is necessary to operate plural conveyance apparatuses or the like in parallel.

As a result, in a plant such as a gasification furnace provided with a slag discharging system, it is concerned that initial cost and maintenance cost increase, and reliability becomes deteriorated as well.
The present invention has been made in the light of the above facts, and has an object to provide a slag discharging system having high flexibility in layout and capable of stable slag discharge in low cost with high reliability.

### {Solution to Problem}

In order to solve the above problems, the present invention employs the following solutions.
A slag discharging system according to one aspect of the present invention is configured to rapidly cool slag discharged by producing combustible gas in a melting plant, within liquid of coolant into glassy slag, collect the slag along with the coolant discharged out of a system of the melting plant into a slag reservoir, and thereafter convey the slag from the slag reservoir to a slag storage tank; and this slag discharging system includes a slag slurry tank for collecting the slag from the slag reservoir into liquid conveyance medium so as to make the slag into slurry therein; slag slurry piping for making a connection between the slag slurry tank and the slag storage tank; and a pump so disposed in the slag slurry piping as to suck the slag slurry within the slag slurry tank and feed the slag slurry to the slag storage tank.

In the above described slag discharging system according to one aspect of the present invention, the slag is continuously discharged by a supply apparatus which the slag reservoir has into the slag slurry tank, where the slag is collected from the slag reservoir into the liquid conveyance medium and is made into slurry, and the slag is sucked in the slag slurry tank along with the liquid conveyance medium as the slag slurry out of the slag slurry tank by the pump; thus the slag discharged from the melting plant is made into stable slag slurry in which variation in density thereof is reduced, so that it is possible to convey the slag slurry through the slag slurry piping to the slag storage tank by the pump. In the slag slurry piping of this case, different from mechanical conveyance means such as a screw conveyor, limitation regarding the conveyance path such as the conveyance angle and the linear movement is significantly relieved.

In order to collect the slag from the slag reservoir into the liquid conveyance medium in the slag slurry tank where the slag is made into slurry, the slag conveyor such as a scraper conveyor and a screw conveyor is generally used. However, since the slag slurry tank is much smaller compared to the slag storage tank, the slag conveyor of this case is hardly subject to such a limitation regarding the conveyance path (the conveyance angle, the linear movement, etc.) as in the case of the conveyance to the slag storage tank.

In the above described slag discharging system, it is preferable that, at an upper position of the slag storage tank, there is provided a dehydration screen for separating the slag slurry flowing out from an outlet of the slag slurry piping into the slag and the liquid conveyance medium, thereby readily collecting the slag separated from the slag slurry into the slag storage tank.

In the above described slag discharging system, it is preferable that, on a side face of the slag storage tank, there is provided a dehydration screen for separating the slag slurry flowing out from the outlet of the slag slurry piping into the slag and the liquid conveyance medium, thereby securing a larger area for the dehydration screen.

In the above described slag discharging system, it is preferable that the slag discharging system further includes a return flow path for returning and collecting the liquid conveyance medium separately collected by the dehydration screen to the slag slurry tank; thus it is possible to return the liquid conveyance medium separately collected by the dehydration screen to the slag slurry tank. As a result, it is possible to reduce used amount of the liquid conveyance medium by cyclic use thereof, as well as recirculate and collect the slag unseparated by the dehydration screen.

In the above described slag discharging system, it is preferable that, at a lower end of a rising part of the slag slurry piping, there is provided a sedimented-slag reception tank equipped with an inlet on-off valve and a discharge valve, and a supply line for supplying in-tank slag purge liquid is connected to the sedimented-slag reception tank; thus even if an unexpected trip occurs in a line, it is possible to prevent the slag slurry piping from being blocked by the residual slag in the piping, and readily perform the next startup.

### {Advantageous Effects of Invention}

According to the above described invention, the slag discharged from the melting plant is made into stable slag slurry in which variation in density thereof is reduced, so that it is possible to convey this slag slurry to the slag storage tank by use of the pump through the slag slurry piping with high flexibility in designing the path and the like.
As a result, it is possible to realize the highly reliable slag discharging system with high flexibility in layout and capable of a stable slag discharge with low cost, thus a plant facility such as a gasification furnace provided with this slag discharging system can achieve outstanding effects such as reduction of initial cost and maintenance cost as well as enhancement of reliability.

### {Brief Description of Drawings}

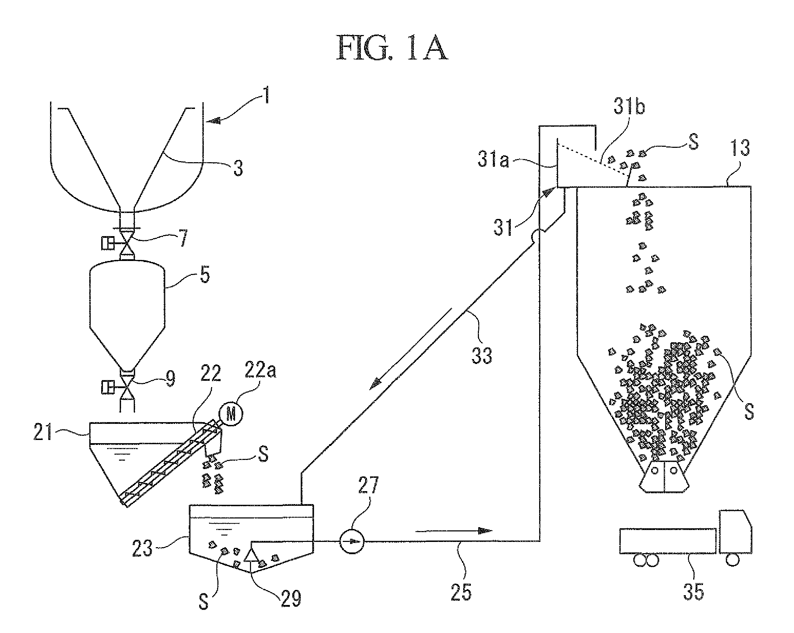

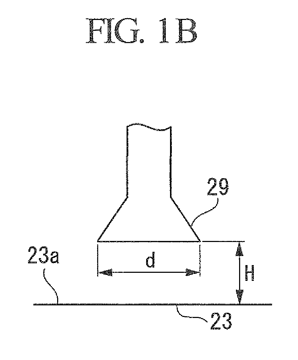

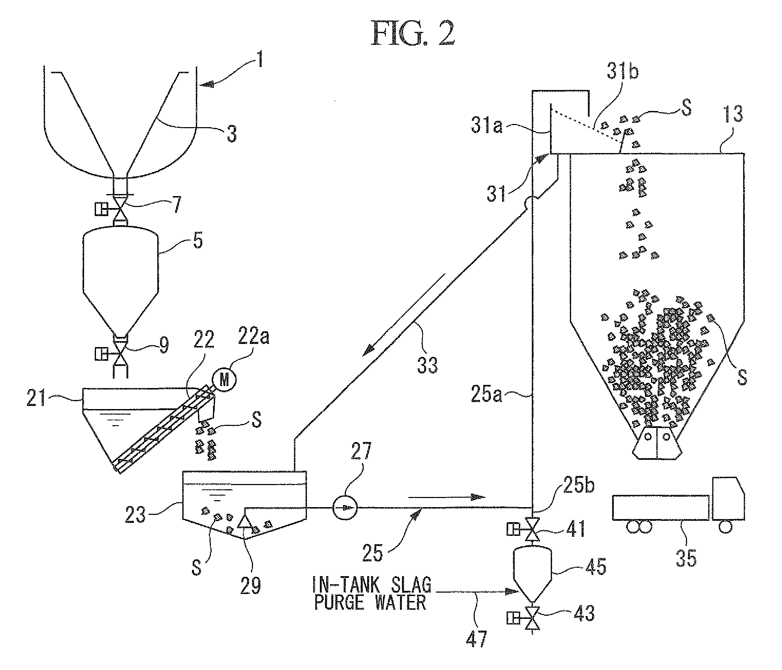

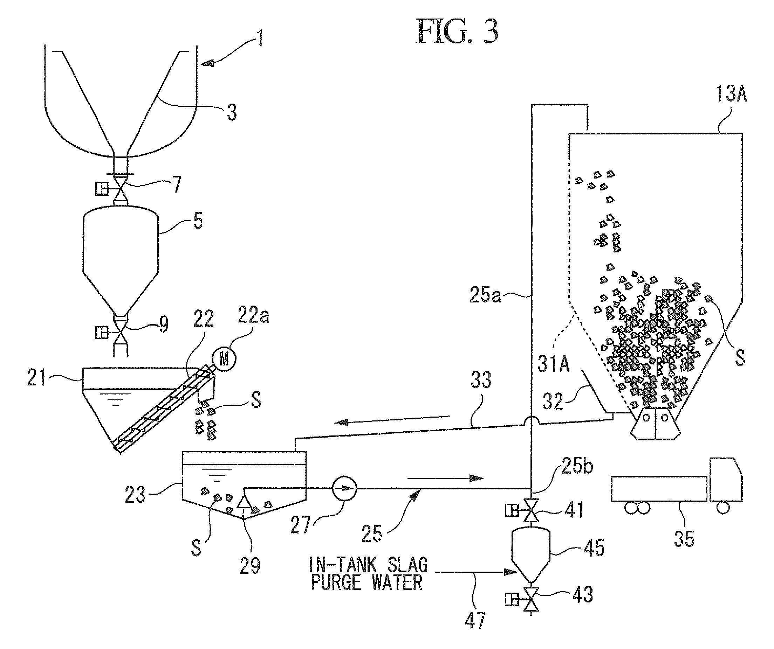

{Fig. 1A} Figure 1A is a view of illustrating a first embodiment of the slag discharging system according to the present invention, which is a system diagram illustrating a system configuration of this slag discharging system.
{Fig. 1B} Figure 1B is a view of illustrating a first embodiment of the slag discharging system according to the present invention, which is an enlarged view illustrating the vicinity of a nozzle for sucking slag slurry from within a slag slurry tank.
{Fig. 2} Figure 2 is a system diagram illustrating a system configuration of a second embodiment of the slag discharging system according to the present invention.
{Fig. 3} Figure 3 is a system diagram illustrating a system configuration of a third embodiment of the slag discharging system according to the present invention.
{Fig. 4} Figure 4 is a system diagram illustrating a system configuration of a conventional slag discharging system.

### {Description of Embodiments}

Hereinafter, explanations will be provided on one embodiment of the slag discharging system according to the present invention with reference to the drawings.
For example, in a plant that melts gasified material such as coal and waste to produce combustible gas such as a coal gasification furnace, an integrated coal gasification combined cycle power generation plant and a melting plant for waste or the like, slag is discharged as ash content after the gasified material is melted to produce combustible gas. This slag is dropped into liquid of coolant such as water and becomes rapidly cooled into glassy slag.
The glassy slag is discharged along with the coolant out of the system of the melting plant by the slag discharging system, which is explained hereinafter. Specifically, the slag discharging system is a system configured to collect glassy slag into the slag reservoir, and thereafter convey the slag in the slag reservoir to the slag storage tank.

### <First Embodiment>

Hereinafter, detailed explanation will be provided on the first embodiment of the slag discharging system according to the present invention, with reference to Figure 1A and Figure 1B. An example of the system configuration of this embodiment illustrated in Figure 1A and Figure 1B is an application example of applying to a gasification furnace 1 for gasifing coal to obtain combustible gas, which is an example of a melting plant.
In the slag discharging system illustrated in the drawings, the slag discharged in a coal gasification process is dropped into the slag cooling water (the coolant) at a lower position of the gasification furnace (the melting plant) 1 and is rapidly cooled therein. The slag made into glassy slag in this way is dropped along with the slag cooling water from the slag hopper 3 provided at a lower part of the gasification furnace 1 into the slag lock hopper 5 and stored therein.
The slag lock hopper 5 periodically discharges the slag accumulated within its hopper, thus a lock hopper inlet valve 7 at an upper position thereof is closed to close up internal pressure of the gasification furnace 1, and thereafter a lock hopper outlet valve 9 at a lower position thereof is opened to discharge the slag along with slag cooling water out of the system of the gasification furnace 1.

Outside the system of the gasification furnace 1, there is provided a slag reservoir 21 for collecting the slag and the slag cooling water that are discharged. This slag reservoir 21 is so disposed beneath the lock hopper outlet valve 9 of the slag lock hopper 5 as to accept and collect the slag and the slag cooling water flowing down from the slag lock hopper 5.
The slag discharging system includes a slag slurry tank 23 for collecting the glassy slag S from the slag reservoir 21 into water (liquid conveyance medium) to make the slag into slurry therein so that the slag collected in the slag reservoir 21 can be conveyed to the slag storage tank 13; slag slurry piping 25 for making a connection between the slag slurry tank 23 and the slag storage tank 13; and a pump 27 so disposed in the slag slurry piping 25 as to suck and feed the slag slurry in the slag slurry tank 23 to the slag storage tank 13.

The slag reservoir 21 has an inlet aperture at an upper part thereof for accepting the slag S and the slag cooling water dropped from the lock hopper valve 9. At a bottom of the slag reservoir 21, there is provided a slope for concentrating the slag settled down in the slag cooling water within the slag reservoir 21 toward a deepest part of the slag reservoir 21. At this time, since the slag reservoir 21 serves for temporarily accepting the slag S collected from the slag lock hopper 5 in the slag discharging system, its capacity is much smaller compared to that of the slag storage tank 13 serving for storing the slag S finally.

The slag slurry tank 23 is a storage container for collecting the slag S from the slag reservoir 21 and making the slag S into slurry with the water therein. This slag slurry tank 23 is so disposed adjacent to the slag reservoir 21 as to accept and collect the slag S conveyed through a slag conveyor 22 from the vicinity of the deepest part of the slag reservoir 21. This slag conveyor 22 may be configured to be small and dedicated to a continuous batching operation.
Since the slag slurry tank 23 serves for temporarily accepting the slag S collected from the slag reservoir 21 and making the slag into slurry therein in the slag discharging system, its capacity is much smaller compared to that of the slag storage tank 13 serving for storing the slag S finally.

The slag conveyor 22 illustrated in the drawing is a screw conveyor driven to rotate by an electric motor 22a, for example, and conveys the slag S from the deepest part of the slag reservoir 21 obliquely upward, and thereafter drops the slag S into an inlet aperture of the slag slurry tank 23 disposed therebeneath. Hence, the conveyance distance of the slag conveyor 22 is hardly subject to any limitation regarding conveyance such as the inclination angle because the capacity of the slag reservoir 21 is much smaller compared to that of the slag storage tank 13.
Note that the slag conveyor 22 used herein is not limited to a screw conveyor, but a scraper conveyor may also be used, for example.

The slag slurry piping 25 is a conveyance flow path for leading the slag slurry sucked by the pump 27 from the slag slurry tank 23 to an upper end of the slag storage tank 13. This slag slurry piping 25 is preferably provided with an abrasion resistant treatment on an inner surface thereof because the slag S flows along with the water inside the piping. As for a specific example of the abrasion resistant treatment, a lining by use of high chromium cast iron, ceramics, abrasion resistant material, etc., is effective. It is preferable that the abrasion resistant treatment is also provided on wetted part of the pump 27 if necessary.

A slag slurry inlet of the slag slurry piping 25 serves as a suction nozzle 29 disposed at an appropriate position in the slag slurry tank 23. This suction nozzle 29 is preferably disposed with a clearance (H) within a range of 0.25d to 10d from a bottom surface 23a of the slag slurry tank 23 based on a nozzle diameter (d), as illustrated in Figure 1B, for example. Specifically, the aperture position of the suction nozzle 29 for sucking the slag S is placed at a height of 0.25d to 10d from the bottom surface 23a of the slag slurry tank 23, thereby reducing variation in density of the slag slurry sucked by the suction nozzle 29, and realizing stable feeding and conveyance of the slag slurry S by use of the pump 27.

A slag slurry outlet of the slag slurry piping 25 is disposed at an upper aperture of the slag storage tank 13 or at an upper position inside the tank, for example, and it is preferable that a dehydration screen 31 is disposed at an upper position of the slag storage tank 13 and the slag slurry is flown out from the slag slurry outlet toward this dehydration screen 31. This dehydration screen 31 includes a container body 31a having an aperture at an upper part thereof and a mesh (or slit) member 31b incliningly disposed at this upper aperture of the container body 31a. In this case, the mesh member 31b dehydrates and separates the slag slurry into the slag and the water when the slag slurry flowing out from the outlet of the slag slurry piping 25 passes through the mesh member 31b.

The slag S separated from the water and remaining on the mesh member 31a of the dehydration screen 31 drops from the slope of the mesh member 31a into the slag storage tank 13 by gravity. On the other hand, the water which was separated by the mesh (or slit) member 31a of the dehydration screen 31 and fell down into the container body 31a is collected through a return flow path 33 connected from the bottom of the container body 31a to the slag slurry tank 23, and is reused as water for use in the liquid conveyance medium.
The slag S stored in the slag storage tank 13 is appropriately conveyed to a next process such as a disposal process by use of a truck 35 or the like before the storage amount in the tank exceeds a predetermined value.

Specifically, the dehydration screen 31 is provided at the upper position of the slag storage tank 13, thereby separating the slag slurry, which is conveyed through the slag slurry piping 25, into the slag S and the water, and readily collecting the slag S separated from the slag slurry into the slag storage tank 13. The return flow path 33 is also provided for returning and collecting the water separately collected by the dehydration screen 31 into the slag slurry tank 23, thereby realizing reuse and cyclic use of the water separately collected by the dehydration screen 31. Such cyclic use of the water reduces amount of the water used as the liquid conveyance medium, and enables the slag S unseparated by the dehydration screen 31 to be recirculated and collected.
Implementation of the process of separating the slag slurry into the slag S and the water is not limited by use of the dehydration screen 31 disposed at the upper position of the slag storage tank 13, and this implementation may also be realized by installing the mesh (or slit) member inside the slag storage tank 13.

According to the slag discharging system configured in the above manner, because the slag S is collected from the slag reservoir 21 into the water in the slag slurry tank 23 where the slag S is made into slurry, the slag S discharged from the gasification furnace 1 becomes stable slag slurry in which variation in its density therein is reduced, so that it is possible to convey this slag slurry through the slag slurry piping 25 to the slag storage tank 13 by the pump 27. In the slag slurry piping 25 of this case, different from mechanical conveyance means such as a screw conveyor, limitation regarding the conveyance path such as the conveyance angle and the linear movement is significantly relieved, so that designing of piping route can be much more flexible. Thus, by conveying and transporting the slag S in slag slurry state, it is possible to increase flexibility in and facilitate designing of the slag slurry piping 25 and designing of installation layout of the slag storage tank 13.

Specifically, supplying the slag S from the slag reservoir 21 via the slag conveyor 22 to the slag slurry tank 23 enables reduction of variation in density of the slag slurry as well as stable conveyance of the slag slurry. In addition, since the height (H) of the nozzle 29 for sucking the slag S is set to be in a range from 0.25d to 10d from the bottom surface 23a of the slag slurry tank 23 based on the nozzle diameter (d), it is possible to reduce variation in density of the slag slurry sucked by the nozzle 29, thereby stabilizing flow of the slag slurry conveyed through the slag slurry piping 25, as well.

Furthermore, the return flow path 33 is so provided as to return the water dehydrated and separated from the slag slurry to the slag slurry tank 23, and reuse this water as water for producing the slag slurry, thereby reducing water amount consumed (drained) for the slag conveyance. Such reduction in water amount provides an advantage in terms of waste water treatment such as size reduction of waste water treatment equipment.
The slag S unseparated by the dehydration screen 31 is recirculated along with the water reused for producing the slag slurry, thereby increasing the collection percentage of the slag S. Specifically, the uncollected slag S along with the water are recirculated, and pass through the dehydration screen 31 once again, so that the uncollected slag S can be collected when passing through the dehydration screen 31 once again, thus the collection percentage thereof can be increased.

### <Second Embodiment>

Next, detailed explanation will be provided on the second embodiment of the slag discharging system according to the present invention, based on Figure 2. Like numbers refer to like components in previously described embodiment, thus, detailed descriptions of these components will be omitted.
In this embodiment, a sedimented-slag reception tank 45 equipped with an inlet on-off valve 41 and a discharge valve 43 is provided at a lower end of a rising part of the slag slurry piping 25. Specifically, in a rising piping 25a formed by disposing the slag slurry piping 25 in the vertical direction, there is provided a sedimentation piping 25b branching downward from the lowermost end that is the lowest position of the rising piping 25a, and the sedimented-slag reception tank 45 equipped with the inlet on-off valve 41 and the discharge valve 43 is provided for this sedimentation piping 25b.

Purge water supply piping 47 is connected to the sedimented-slag reception tank 45, and this purge water supply piping 47 serves as a supply line for supplying in-tank slag purge water (slag purge liquid) into the tank.
In the slag discharging system configured in such a manner, even if an unexpected trip occurs in a line, it is possible to prevent the slag slurry piping 25 from being blocked by the residual slag S in the piping, and readily perform the next startup. Note that the above described inlet on-off valve 41 and discharge valve 43 are both in a close state in the normal operation.

To be specific, in the normal operation, the inlet on-off valve 41 is closed so that the slag slurry piping 25 and the sedimented-slag reception tank 45 are separated from each other, thus the slag slurry is conveyed through the slag slurry piping 25 to the slag storage tank 13, as similar to the previously described embodiment without the sedimented-slag reception tank 45.
However, if a trip occurs in a line of the slag discharging system, the pump 27 stops its operation so that the flow through the slag slurry piping 25 is also stopped. As a result, the slag slurry remains within the slag slurry piping 25, and the slag S of this remaining slag slurry is settled down in the water by gravity over time, to be separated.

If the slag S is settled down and sedimented at the lower part of the rising piping 25a, this sedimentation hinders a flow for the next startup when the operation is resumed by removing the trip, which makes it difficult to carry out a smooth startup.
To counter this problem, when a trip occurs in a line, the inlet valve 41 of the sedimented-slag reception tank 45 is put in an open state in a very short time from the occurrence of trip so as to collect the slag S remaining in the rising piping 25a. As a result, the slag slurry in the rising piping 25a flows into the sedimented-slag reception tank 45 located at the lowest position in the piping by gravity, to be collected therein.

The slag S collected in the sedimented-slag reception tank 45 is purged into the slag storage tank 13 via the slag slurry piping 25 by the in-tank slag purge water supplied from the purge water supply piping 47. At this time, the inlet on-off valve 41 is put in the open state and the discharge valve 43 stays in the close state.
After the purging is completed, in which approximately total amount of the slag S collected in the sedimented-slag reception tank 45 is purged into the slag storage tank 13, the inlet on-off valve 41 of the sedimented-slag reception tank 45 is put in the close state. Note that the discharge valve 43 is put in the open state at the time of cleaning and discharging the residual slag S within the sedimented-slag reception tank 45 and draining the water, or the like.

In the slag discharging system configured as described above, even if an unexpected trip occurs in a line, it is possible to prevent the slag slurry piping 25 from being blocked by the settlement and sedimentation of the residual slag S remaining in the piping. Then, after the trip occurs in the line, the inside of the slag slurry piping 25 as well as the sedimented-slag reception tank 45 are purged, thereby readily performing a smooth start-up at the time of resuming the operation after the trip is removed.

### <Third Embodiment>

Next, detailed explanation will be provided on the third embodiment of the slag discharging system according to the present invention, based on Figure 3. Like numbers refer to like components in previously described embodiment, thus, detailed descriptions of these components will be omitted.
In this embodiment, there is provided a dehydration screen 31A on a side face of a slag storage tank 13A instead of the dehydration screen 31 provided at the upper position of the slag storage tank 13.

This dehydration screen 31A serves for separating the slag slurry into the slag and the water after the slag slurry flown out from the outlet of the slag slurry piping 25 is accepted into the slag storage tank 13A. Specifically, the dehydration screen 31A is formed in such a manner that the side face of the slag storage tank 13A, that is, a body or a cone part of the slag storage tank 13A is formed by a mesh (or slit) member having apertures small enough for the slag S not to pass therethrough.
In addition, on a lower circumference of the slag storage tank 13A, there is provided a separated-water reservoir 32 for accepting the water passing through the dehydration screen 31A. For the sake of reusing the collected water, the return flow path 33 connected to the slag slurry tank 23 is connected to a bottom of this separated-water reservoir 32.

In the slag discharging system configured in such a manner, the dehydration screen 13 provided at the upper position of the slag storage tank 13 is eliminated, and the dehydration screen 31A is provided on the side face of the slag storage tank 13A instead, so that a larger area can be secured for the dehydration screen 31A, thereby readily optimizing the density of the slag slurry (28 wt% or less, preferably 6 wt% or less).
Since a larger area can be secured for the dehydration screen 31A, apertures of the screen can be set to be smaller (3 to 8 mm, preferably 5 mm). Furthermore, the slag slurry is separated when passing through the dehydration screen 31A, and a layer of the slag S sedimented in the slag storage tank 13A serves as a filter layer, thereby lowering particle concentration of the slag S included in the circulation water separated through the dehydration screen 31A, flowing through the return flow path 33 back to the slag slurry tank 23. Therefore, since abrasion caused by the flow of the slag S can be reduced, durability can be enhanced in piping material or the like such as the return piping 33 in contact with the circulation water flowing back to the slag slurry tank 23.

According to the above described embodiment, the slag S discharged from the melting plant such as the gasification furnace 1 is made into stable slag slurry in which variation in density thereof is reduced, so that it is possible to convey this slag slurry to the slag storage tank 13 by use of the pump 27 through the slag slurry piping 25 with high flexibility in designing the path and the like. As a result, it is possible to realize the highly reliable slag discharging system with high flexibility in layout and capable of a stable slag discharge with low cost. Accordingly, the plant facility such as the gasification furnace 1 provided with this slag discharging system can reduce initial cost and maintenance cost as well as securing high reliability.

In particular, the height (H) of the nozzle 29 for sucking the slag S is set in the range from 0.25d to 10d or so from the bottom surface 23a of the slag slurry tank 23 based on the nozzle diameter (d), thereby reducing variation in density of the slag slurry and enabling the stable conveyance thereof.
In addition, the return piping 33 is so provided as to return the water dehydrated and separated from the slag slurry to the slag slurry tank 23, thereby reducing the used amount of the water that is the liquid conveyance medium, so that it is possible to recirculate and collect the unseparated slag by the dehydration screen 31.
The present invention is not limited to the above described embodiments, and various modifications may be made without departing from the spirit and scope of the present invention.

### {Reference Signs List}

- 1: Gasification furnace (melting plant)
- 3: Slag hopper
- 5: Slag lock hopper
- 13, 13A: Slag storage tank
- 21: Slag reservoir,
- 22: Slag conveyor
- 23: Slag slurry tank
- 25: Slag slurry piping
- 27: Pump
- 29: Nozzle
- 31, 31A: Dehydration screen
- 33: Return piping
- 45: Sedimented-slag reception tank
- 47: Purge water supply piping
- S: Slag

## Claims

1. A slag discharging system configured to
rapidly cool slag discharged by producing combustible gas in a melting plant, within liquid of coolant into glassy slag,
collect the slag along with the coolant discharged out of a system of the melting plant into a slag reservoir, and
thereafter convey the slag from the slag reservoir to a slag storage tank,
the slag discharging system comprising:
a slag slurry tank for collecting the slag from the slag reservoir into liquid conveyance medium so as to make the slag into slurry therein;
slag slurry piping for making a connection between the slag slurry tank and the slag storage tank; and
a pump so disposed in the slag slurry piping as to suck the slag slurry within the slag slurry tank and feed the slag slurry to the slag storage tank.

2. The slag discharging system according to claim 1, wherein at an upper position of the slag storage tank, there is provided a dehydration screen for separating the slag slurry flowing out from an outlet of the slag slurry piping into the slag and the liquid conveyance medium.

3. The slag discharging system according to claim 1, wherein on a side face of the slag storage tank, there is provided a dehydration screen for separating the slag slurry flowing out from an outlet of the slag slurry piping into the slag and the liquid conveyance medium.

4. The slag discharging system according to claim 2 or claim 3, further comprising
a return flow path for returning and collecting the liquid conveyance medium separately collected by the dehydration screen to the slag slurry tank.

5. The slag discharging system according to any one of claim 1 to claim 4, wherein
at a lower end of a rising part of the slag slurry piping, there is provided a sedimented-slag reception tank equipped with an inlet on-off valve and a discharge valve, and
a supply line for supplying in-tank slag purge liquid is connected to the sedimented-slag reception tank.
